# EUROPEAN PATENT SPECIFICATION

(11) **EP 2 465 623 B1**
(45) Date of publication and mention of the grant of the patent: **28.10.2015**
(21) Application number: 09848194.8
(22) Date of filing: 25.11.2009
(51) Int. Cl.: B22C 9/02, B22C 9/00, B22D 15/00, B28D 1/18

(54) **ADAPTIVE PRODUCTION METHOD FOR MOULD**
ADAPTIVES PRODUKTIONSVERFAHREN FÜR GUSSFORMEN
PROCÉDÉ DE PRODUCTION ADAPTATIVE DE MOULE

(30) Priority: 12.08.2009 CN 200910162301
(43) Date of publication of application: 20.06.2012
(73) Proprietor: Advanced Manufacture Technology Center, China Academy of Machinery Science & Technology, Beijing 100083 (CN)
(72) Inventor: SHAN, Zhongde, Beijing 100083 (CN); LIU, Feng, Beijing 100083 (CN); LI, Xinya, Beijing 100044 (CN); WANG, Xianglei, Beijing 100083 (CN); DONG, Xiaoli, Beijing 100083 (CN)
(74) Representative: Zacco Sweden AB
(86) International application number: PCT/CN2009/075127
(87) International publication number: WO 2011/017864

(56) References cited:
- CN-A- 101 259 526
- CN-A- 101 279 357
- CN-A- 101 298 091
- US-A1- 2007 044 932

## Description

### TECHNICAL FIELD OF THE INVENTION

The present application relates to a self-adaptive casting mould manufacturing method for a casting, and belongs to casting and digital control processing technical field.

### BACKGROUND OF THE INVENTION

Casting may be used to produce complex parts, and is one of the most important processing methods for metal forming. With the globalization of the market and the intensifying competition, the updating speed of products becomes faster, the demands for one piece of or small batch of casting become more and more. Especially, the process for manufacturing a sand mould of a large casting requires a short production cycle and more flexible manufacturing manner. However, some castings may become waste products due to unreasonable structural design and different heat transfer coefficient, interfacial heat transfer coefficient and contraction rate of the castings. For solving the above problem, the present application provides a self-adaptive casting mould manufacturing method for a casting, which significantly improves the flexibility and the operability of the casting mould design and makes it possible to realize modeling schemes which are not easy to be realized or cannot be realized traditionally.

In present, there are three manufacturing methods for the casting mould: the traditional sand mould manufacturing method, the rapid prototyping sand mould manufacturing method and the digital-control-processing-based sand mould manufacturing method. The traditional sand mould manufacturing method needs to machine a wood mould based on the casting and then to obtain the casting sand mould via sand box sand casting. The rapid prototyping sand mould manufacturing method is based on the discrete-accumulation principle. In this method, firstly a digital model of the sand mould is sliced in the Z direction to form a series of slices; and then according to outline information of the slices, adhesive is selectively sprayed onto or laser sintering is selectively applied to each layer of the laid mould sand; all layers are accumulated together to form a three-dimensional sand mould. The self-adaptive casting mould method employs partitioning and assembling method to manufacture the casting mould. In this method, mould sand materials and contraction rates of individual partition units of the casting mould may be selected separately according to requirements on stress field and temperature field during filling and solidification process of the casting; the designer may determine whether placing an iron chill, a cooling tube or an air vent tube inside a mould cavity in advance; and appropriate ridge joint structure may be designed to realize the self-localization and self-locking assembling of the partitioned casting mould, such that the casting mould may actively adapt to the casting solidification process so as to decrease casting flaws such as contraction cavity, shrinkage and crack and improve the casting quality effectively. One example of prior art is disclosed in CN 101 298 091 A for low-pressure core assembly casting technique for V6 aluminum cylinder-block of automobile engines. Another example of prior art is disclosed in US 2007/044932 A1 using a method for producing a casting mold from a composite mold material for foundry purposes. Yet another prior art example is disclosed in CN 101 279 357 A relating to a method for adopting an industrial robot to carry out ordinary sand mold milling processing, which pertains to the cross technology of casting, numeric control processing and industrial robots. Still another prior art examplet is disclosed in CN 101 259 526 A using a casting manufacturing method for general sand casting, which pertains to a digital-driven rapid manufacturing casting technology.

Traditional mould-based sand mould manufacturing method is hard to produce casting moulds with high-precision and good surface quality due to long processing cycle and high cost of the wood mould, a metal mould and a core box, and cannot meet the processing demands for one piece of or small batch of casting. Using rapid prototyping technology to manufacture sand mould would cause the following deficiencies: processing layer by layer causes low processing efficiency and is not suitable for the processing of large casting moulds; sand particles are adhered together by adhesive or laser sintering to form a casting mould having compact and dense internal surface which has poor air permeability, thus the castings are easy to have defects; layered processing would cause stair-stepping effect when processing some complex surfaces.

### SUMMARY OF THE INVENTION

For solving the above deficiencies of the prior art, the present application provides a self-adaptive casting mould manufacturing method for a casting. The above method employs partitioning and assembling method to manufacture the casting mould so as to produce casting sand moulds having various shapes which improves the processing range, and at the same time the casting mould may actively adapt to the casting solidification process which improves the casting quality. The above method is particularly suitable for manufacturing of the casting mould of one piece of or small batch of large-medium castings.

For realizing the above object, the present application provides a self-adaptive casting mould manufacturing method for a casting, including the following steps:
a) constructing a three-dimensional solid model of a casting mould according to a drawing of a casting to obtain a casting mould cavity, and then designing a gate and riser system;
b) designing sand partitions of the casting mould (core) according to a structure of the casting mould;
c) employing various mould sand materials to manufacture the sand partitions according to structural features of sand partitions;
d) placing an iron chill, a cooling passage or an air vent passage at different portions of the casting mould;
e) assembling the casting mould (core) and post-processing the assembled casting mould (core).

Preferably, the various mould sand materials may employ granule zircon, mullite powder, quartz sand or graphite mainly according to locations and contraction rates of individual casting mould units.

Preferably, cutting accuracy of sand mould of individual sand partition is up to ±0.1mm, and fitting accuracy between sand partitions is up to ±0.1~1mm which mostly depends on dimensions of the individual sand partitions.

Preferably, according to solidification simulation results of stress field and temperature field during filling and solidification process of the casting, variety and contraction rate of mould sand for the individual sand partition (the casting mould) is determined, and then dimension of the sand partition to be mixed and manufactured is determined to construct a casting model of the individual sand partition.

Preferably, the assembling of sand partitions is made mostly based on fitting dimensions of individual sand partitions.

In the self-adaptive casting mould manufacturing method for the casting, the sand mould is partitioned according to the drawings of the casting to be processed, and then a path planning is performed according to the structure of the partitioned sand mould.

Compared with the present traditional casting mould manufacturing method, rapid prototyping manufacturing method and digital control processing method, the self-adaptive casting mould manufacturing method for the casting of the present application has the following advantages.

1. It has high efficiency and high speed. Compared with the traditional casting mould manufacturing method, the manufacturing processes for the wood mould, the metal mould and the core box are omitted in the method of the present application; compared with the rapid prototyping manufacturing method, high-speed cutting may be realized in the method of the present application.

2. The produced casting mould has good casting performance. Compared with the rapid prototyping manufacturing method, the problem that too compact and dense part is caused by selectively adhering or sintering is avoided in the manufacturing method of the present application.

3. It has high processing flexibility and good quality of the casting. Compared with the sand mould milling manufacturing method based on a machine tool, the manufacturing method of the present application has broader processing range and higher processing flexibility, greatly improves the flexibility and the operability of the casting mould design, and makes it possible to realize modeling schemes which are not easy to be realized or can not be realized traditionally.

### BRIEF DESCRIPTION OF DRAWINGS

The present application will be further described in conjunction with drawings and embodiments hereinafter.
Figure 1 is a schematic view of self-adaptive casting mould manufacturing of a casting; and
Figure 2 is a flow chart of the self-adaptive casting mould manufacturing of the casting.

### Reference signs:

1-different mould sands
2-air vent passage
3-cooling passage
4-iron chill
5-casting.

### DETAILED DESCRIPTION OF THE INVENTION

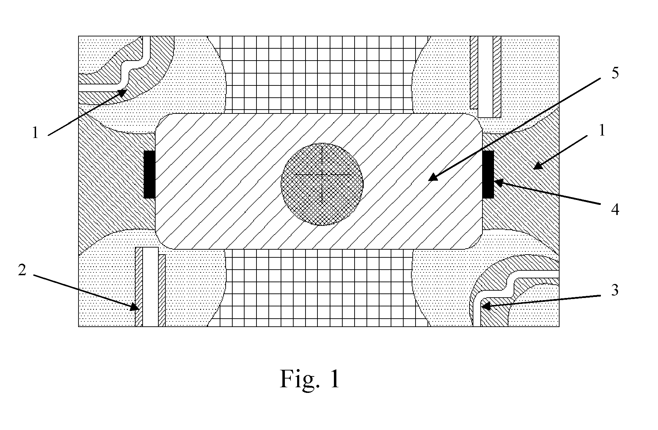

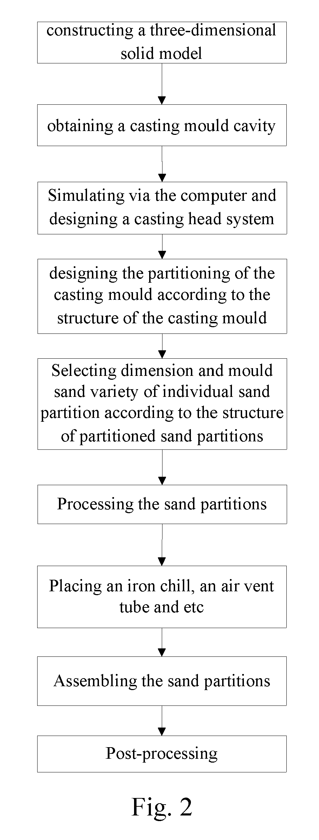

The present application will be described in detail in conjunction with Figs. 1 and 2 hereinafter; however the present application is not limited hereto.

The method of the present application may include the following steps:
(1) constructing a three-dimensional solid model of a casting by a three-dimensional software and obtaining a casting mould cavity to be cut according to the solid model;
(2) designing the structure of individual sand partitions separately according to the performance requirement of the casting, determining amount and dimension of individual sand partitions, and optimizing a processing path;
(3) preparing individual sand partitions: for hot spot portion or thick portion of the casting, granule zircon having granularity of 50/100 mesh are employed to be mixed with adhesive, hardener and additive to produce an individual sand partition, other modeling materials having good heat transfer coefficient such as graphite may also be employed to produce such a sand partition; for regular portions of the casting, quartz sand having granularity of 70/140 mesh are employed to be mixed with adhesive, hardener and additive to produce other individual sand partitions; for portions of the casting that need high dimensional precision and high refractoriness, mullite powder may be employed to produce further individual sand partitions;
(4) mounting the solidified individual sand partition on a bench and cutting the mounted sand partition;
(5) placing an iron chill and an air vent passage in corresponding portions of the sand partition according to a whole structure of the casting mould;
(6) assembling the produced individual sand partitions;
(7) post-processing the assembled casting mould.

During the assembling process of the sand partitions, mould sand and contraction rate of individual partition units of the casting mould may be selected separately according to the requirements on stress field and temperature field during the filling and solidification process of the casting, and it is determined whether the iron chill, the cooling passage or the air vent passage may be placed inside a mould cavity according to the above requirements, such that the casting mould may actively adapt to the solidification process of the casting.

The above embodiment is only one of embodiments of the present application. For the person skilled in the art, any modifications and substitutions may be made to the present application within the scope of the technical solution of the present application, and these modifications and substitutions should be deemed to fall into the protection scope of the present application

## Claims

1. A self-adaptive casting mould manufacturing method for a casting (5), wherein the method comprises the following steps:
a) constructing a three-dimensional solid model of a casting mould according to a drawing of a casting to obtain a casting mould cavity, and then designing a gate and riser system;
b) designing sand partitions of the casting mould according to a structure of the casting mould;
c) according to solidification simulation results of stress field and temperature field during filling and solidification process of the casting, employing mould sand materials having various varieties and contraction rates and determining dimensions of the sand partitions to be mixed and manufactured to manufacture the sand partitions;
d) placing an iron chill (4), a cooling passage (3) or an air vent passage (2) at different portions of the casting mould;
e) assembling the casting mould and post-processing the assembled casting mould;
wherein, the method is configured to realize a high-speed cutting.

2. The self-adaptive casting mould manufacturing method for the casting (5) according to claim 1, wherein the various mould sand materials may employ granule zircon, mullite powder, quartz sand or graphite mainly according to locations and contraction rates of individual casting mould units.

3. The self-adaptive casting mould manufacturing method for the casting (5) according to claim 1, wherein cutting accuracy of sand mould of individual sand partition is up to ±0.1mm, and fitting accuracy between sand partitions is up to ±0.1~1mm which depends on dimensions of the individual sand partitions.

4. The self-adaptive casting mould manufacturing method for the casting (5) according to claim 1, wherein the assembling the casting mould is made based on fitting dimensions of individual sand partitions.

## Patentansprüche

1. Selbstadaptives Gießformen-Produktionsverfahren für Gießformen (5), wobei das Verfahren die folgenden Schritte umfasst:
a) Konstruieren eines dreidimensionalen festen Modells einer Gießform gemäß einer Zeichnung eines Gießformens zum Erhalten eines Formhohlraums, und dann das Bilden eines Gate-and-Riser-Systems;
b) Bilden von Sand-Partitionen der Gießform gemäß einer Struktur der Gießform;
c) gemäß Erstarrungssimulationsergebnissen von Spannungsfeld und Temperaturfeld während des Formfüllungs- und Erstarrungsvorgangs des Gießformens, Anwendung von Sandgießmaterialien mit verschiedenen Varietäten und Kontraktionsraten und Bestimmung von Abmessungen der zu mischenden und zu produzierenden Sand-Partitionen, um die Sand-Partitionen zu produzieren;
d) Platzieren einer Kühlkokille (4), eines Kühldurchgangs (3) oder eines Entlüftungsdurchgangs (2) an verschiedenen Abschnitten der Gießform;
e) Zusammenbauen der Gießform und Nachbearbeitung der zusammengebauten Gießform;
wobei das Verfahren zum Durchführen von High-Speed-Cutting ausgebildet ist.

2. Selbstadaptives Gießformen-Produktionsverfahren für das Gießformen (5) nach Anspruch 1, wobei die verschiedenen Sandgießmaterialien granulierten Zirkon, Mullitpulver, Quarzsand oder Graphit verwenden, hauptsächlich entsprechend den Orten und Kontraktionsraten von individuellen Gießformeinheiten.

3. Selbstadaptives Gießformen-Produktionsverfahren für das Gießformen (5) nach Anspruch 1, wobei die Schnittgenauigkeit einer Gießform mit individueller Sand-Partition bis zu ± 0,1 mm beträgt, und die Passgenauigkeit zwischen Sand-Partitionen bis zu ± 0,1~1 mm beträgt, abhängig von Abmessungen der individuellen Sand-Partitionen.

4. Selbstadaptives Gießformen-Produktionsverfahren für das Gießformen (5) nach Anspruch 1, wobei das Zusammenbauen der Gießform auf der Basis von Einbaumaßen individueller Sand-Partitionen durchgeführt wird.

## Revendications

1. Procédé de production auto-adaptative de moule par la coulée pour une pièce coulée (5), dans lequel le procédé comprend les étapes suivantes:
a) la construction d'un modèle solide tridimensionnel d'un moule par la coulée selon un dessin d'une pièce moulée pour obtenir une cavité de moule par la coulée, et ensuite de concevoir un système de grille et colonne montante;
b) la conception de partitions de sable du moule par la coulée selon une structure du moule par la coulée;
c) en fonction des résultats de simulation de la solidification du champ de contraintes et du champ de température au cours du processus de remplissage et de solidification de la pièce coulée, l'emploi de divers matériaux de sable de moule ayant différentes variétés et différents taux de contraction et la détermination de dimensions de partitions de sable pour être mélangées et fabriquées pour fabriquer les partitions de sable;
d) le positionnement d'un refroidisseur de fer (4), d'un passage de refroidissement (3) ou d'un passage d'aération (2) à différentes parties du moule par la coulée;
e) l'assemblage du moule par la coulée et l'après-traitement du moule par la coulée assemblé;
dans lequel le procédé est configuré pour réaliser un coupage à haute vitesse.

2. Procédé de production auto-adaptative de moule par la coulée pour la pièce coulée (5) selon la revendication 1, dans lequel les différents matériaux de sable de moulage peuvent employer des granulés de zircon, une poudre de mullite, du sable de quartz ou du graphite principalement selon les endroits et les taux de coulée individuels des unités individuelles de moule par la coulée.

3. Procédé de production auto-adaptative de moule par la coulée pour la pièce coulée (5) selon la revendication 1, dans lequel la précision de coupe du moule en sable de la partition de sable individuelle s'élève jusqu'à ± 0,1 mm, et la précision d'adaptation entre les partitions de sable s'élève jusqu'à ± 0,1~1mm ce qui dépend surtout de dimensions des partitions de sable individuelles.

4. Procédé de production auto-adaptative de moule par la coulée pour la pièce coulée (5) selon la revendication 1, dans lequel l'assemblage du moule par la coulée est réalisé sur la base de dimensions d'adaptation de partitions de sable individuelles.
